(19)

Europäisches
Patentamt

European
Patent Office

Office européen
des brevets

(11) **EP 4 529 004 A1**

(12) **EUROPEAN PATENT APPLICATION**

(43) Date of publication:
**26.03.2025 Bulletin 2025/13**

(21) Application number: **23198412.1**

(22) Date of filing: **19.09.2023**

(51) International Patent Classification (IPC):
*H02K 19/24* (2006.01)        *H02K 19/36* (2006.01)
*H02K 53/00* (2006.01)        *H02K 47/20* (2006.01)
*H02K 11/00* (2016.01)

(52) Cooperative Patent Classification (CPC):
**H02K 19/24; H02K 19/36; H02K 47/20;
H02K 53/00;** H02K 11/0094

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Elan Research - 9456-4424 Quebec Inc.
Granby Quebec J2G 9M6 (CA)**

(72) Inventors:
• **GUAY, Benoit**
  **J2L 0A3 Bromont (CA)**
• **MALO, Jerome-Olivier**
  **J2G 9M6 Granby (CA)**
• **TESSIER, Rejean**
  **J2L 0A3 Bromont (CA)**

(74) Representative: **BCF Global
17-21, rue Saint-Fiacre
75002 Paris (FR)**

(54) **ASSEMBLY FOR VARYING INDUCTANCE**

(57)    An assembly for varying inductance including a stator and a rotor is disclosed. The stator produces at least one pair of magnetically opposed poles, a line extending from one pole to another pole of the same pair of poles defining a first direction. The stator defines a cavity therein, poles of a same pair of magnetically opposed poles being disposed on opposite sides of the cavity. The rotor is disposed in the cavity and includes a rotor body disposed between the poles of each of the at least one pair of magnetically opposed poles. The rotor rotates about a rotation axis extending orthogonally to the first direction. The rotor body defines a plurality of outwardly extending members extending from the rotor body orthogonally to the rotation axis. In use, rotation of the rotor about the rotation axis causes a periodical alternation of an inductance of the assembly.

Figure 4A

## Description

### TECHNICAL FIELD

The present disclosure relates to the field of electric systems, devices and components having variable inductance, and in particular to an assembly for varying inductance.

### BACKGROUND

In many field applications, electricity generating devices, or simply "generators", are used to provide electric power for use in an external circuit. For example, generators may convert motion-based power or fuel-based power into electric power for operating electric devices in remote environments such as quarries, construction sites, manufacturing areas, etc.

However, current technologies have drawbacks such as relatively low conversion ratios and/or relatively vast footprint, which lead to inconveniency in the use of generators. For example, the conversion ratio for fuel-based power into electric power is typically between 0.4 and 0.5. In addition, some of the generators may weigh up to more than 10,000 kilograms.

Consequently, efficient assemblies for generating electric power having a relatively reduced footprint may be desirable.

### SUMMARY

In a first broad aspect of the present disclosure, there is provided an assembly for varying inductance including a stator configured to produce at least one pair of magnetically opposed poles, a line extending from one pole of the at least one pair of magnetically opposed poles to another one of the at least one pair of magnetically opposed poles defining a first direction, the stator defining a cavity therein, poles of a same pair of magnetically opposed poles being disposed on opposite sides of the cavity and a rotor disposed in the cavity of the stator, the rotor including a rotor body disposed between the poles of each of the at least one pair of magnetically opposed poles. The rotor rotates about a rotation axis thereof, the rotation axis extending orthogonally to the first direction. The rotor body defines a plurality of outwardly extending members extending from the rotor body orthogonally to the rotation axis of the rotor. When in use, rotation of the rotor about the rotation axis causes a periodical alternation of an inductance of the assembly.

In some non-limiting implementations, the stator defines a closed periphery centered around the rotation axis of the rotor and at least one pair of inwardly extending members extending orthogonally to the rotation axis. The inwardly extending members of a same pair are diametrically opposed, the inwardly extending members being evenly distributed along the closed periphery. Each of the inwardly extending members being configured to receive a wire coil to produce the magnetically opposed poles.

In some non-limiting implementations, the stator has a substantially rounded shape centered around the rotation axis of the rotor.

In some non-limiting implementations, the assembly further includes wire coils disposed on the inwardly extending members, the wire coils being electrically connected to a capacitor an electric current flowing in the wire coils producing the at least one pair of magnetically opposed poles.

In some non-limiting implementations, the wire coils are electrically connected to a capacitor thereby forming an electric circuit and a rotation speed of the rotor about the rotation axis is set such that a frequency of alternation of an inductance of the assembly is twice an eigenfrequency of the electric circuit.

In some non-limiting implementations, the assembly further includes an actuator operatively coupled to the rotor for causing a rotation thereof.

In some non-limiting implementations, the actuator includes at least one of a motor, a reciprocating engine, a propeller and a rotating blade arrangement.

In some non-limiting implementations, the assembly further includes a casing for housing the stator and the rotor, the casing being configured to be disposed on a support surface such that the rotation axis extends substantially orthogonally to the support surface.

In some non-limiting implementations, the rotation axis extends substantially parallel to a gravity axis.

In some non-limiting implementations, the assembly further includes a casing for housing the stator and the rotor, the casing being configured to be disposed on a support surface such that the rotation axis extends substantially parallel to the support surface.

In some non-limiting implementations, at least one of the stator and the rotor is made of stacked metallic foils.

In some non-limiting implementations, each metallic foil is treated to orient local magnetic moments of the metallic foil therealong.

In some non-limiting implementations, each metallic foil is covered with an electrically insulating coating.

In some non-limiting implementations, a width of the stator and the rotor is between 2.5 and 8.0cm.

In some non-limiting implementations, the stator includes six inwardly extending members and the rotor includes six outwardly extending members.

In some non-limiting implementations, the at least one pair of magnetically opposed poles includes three pairs of magnetically opposed poles, the stator being configured to produce one pole on each of the six inwardly extending members.

In some non-limiting implementations, the plurality of outwardly extending members of the rotor simultaneously faces the magnetically opposed poles upon rotation of the rotor about the rotation axis, each outwardly extending member facing a respective one pole of the magnetically opposed poles.

In accordance with a second broad aspect of the present technology, there is provided an assembly including a stator having a closed periphery defining a cavity therein, the stator comprising at least one pair of inwardly extending members extending along a main plane, inwardly extending members of a same pair of inwardly extending members being disposed on opposite sides of the cavity, the inwardly extending members being distributed evenly along the closed periphery, a plurality of wire coils disposed on the at least one pair of inwardly extending members, the wire coils being electrically connected to a capacitor, and a rotor disposed in the cavity of the stator, the rotor being configured to rotate about a rotation axis thereof, the rotation axis extending orthogonally to the main plane. The rotor body defines a plurality of outwardly extending members extending from the rotor body orthogonally to the rotation axis of the rotor. When in use, rotation of the rotor about the rotation axis causes a periodical alternation of an inductance of the assembly, the plurality of outwardly extending members of the rotor simultaneously facing the inwardly extending members upon rotation of the rotor about the rotation axis, each outwardly extending member facing a respective one pole of the inwardly extending members.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims

## BRIEF DESCRIPTION OF THE FIGURES

The features and advantages of the present disclosure will become apparent from the following detailed description, taken in combination with the appended drawings, in which:

Figure 1 is a schematic diagram of a rotor and a stator of an assembly for varying inductance in accordance with non-limiting implementations of the present technology;

Figure 2 is a perspective view of the rotor and the stator of Figure 1 in the first position;

Figure 3 is a perspective view of the rotor and the stator of Figure 1, with wire coils disposed on the stator in accordance with non-limiting implementations of the present technology;

Figure 4A is a schematic diagram of the rotor and the stator of Figure in a second position, with the wire coils disposed on the stator

Figure 4B is a schematic diagram of the rotor and the stator of Figure in the first position, with the wire coils disposed on the stator;

Figure 5 is a schematic diagram of a rotor and a stator of the assembly for varying inductance in accordance with another non-limiting implementation of the present technology;

Figure 6 is a perspective view of an assembly for varying inductance in accordance with non-limiting implementations of the present technology, the assembly including the rotor and stator of Figure 1;

Figure 7 is a perspective view the assembly of Figure 6, with some exterior components removed;

Figure 8 is a schematic diagram of the assembly of Figure 6 implemented in an electric circuit according to another embodiment of the present technology; and

Figure 9 an electric diagram of the assembly of Figure 6 implemented in an electric circuit according to yet another embodiment of the present technology.

It is to be understood that throughout the appended drawings and corresponding descriptions, like features are identified by like reference characters. Furthermore, it is also to be understood that the drawings and ensuing descriptions are intended for illustrative purposes only and that such disclosures are not intended to limit the scope of the claims. It should also be noted that, unless otherwise explicitly specified herein, the drawings are not to scale.

**DETAILED DESCRIPTION**

Various representative embodiments of the disclosed technology will be described more fully hereinafter with reference to the accompanying drawings, in which representative embodiments are shown. The presently disclosed technology may, however, be embodied in many different forms and should not be construed as limited to the representative embodiments set forth herein. Rather, these representative embodiments are provided so that the disclosure will be thorough and complete, and will fully convey the scope of the present technology to those skilled in the art. In the drawings, the sizes and relative sizes of layers and regions may be exaggerated for clarity. Like numerals refer to like elements throughout. And, unless otherwise defined, all technical and scientific terms used herein have the same meaning as commonly understood by one of ordinary skill in the art to which the described embodiments pertain.

Generally speaking, the present disclosure introduces an assembly for varying inductance. The assembly includes a stator defining a cavity, and a rotor that rotates therein. The stator produces at least one pair of magnetically opposed poles upon rotation of the rotor around a rotation axis thereof. In use, an actuator causes the rotor to rotate, which leads to generation of electric current through interaction of the magnetically opposed poles and the rotor. It can be said that mechanical energy of the rotor received by the actuator is converted into electric energy through generation of electric current through electromagnetic interactions. In one aspect, the assembly has a relatively small form factor and reduced weight compared to prior art assemblies to increase conveniency of usage of the assembly in a vast number of applications.

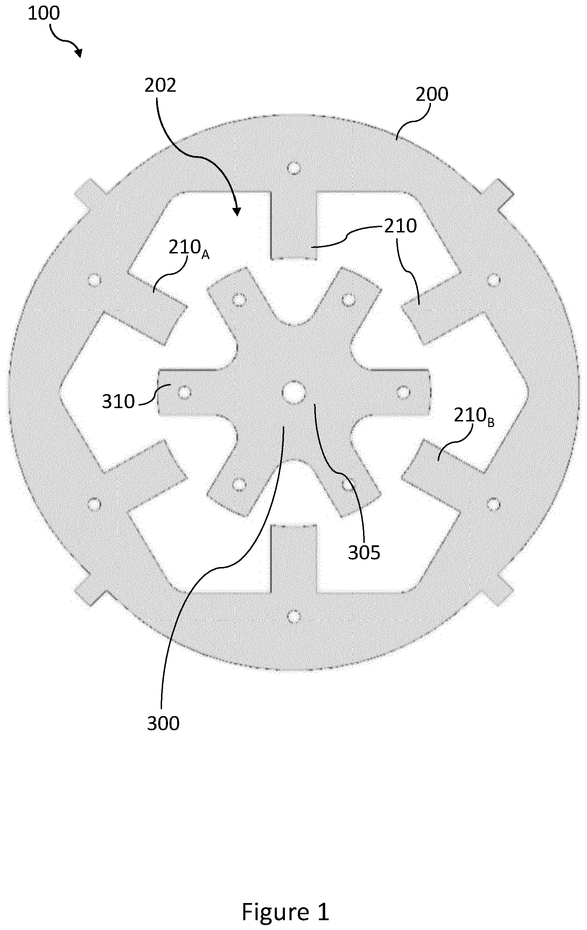

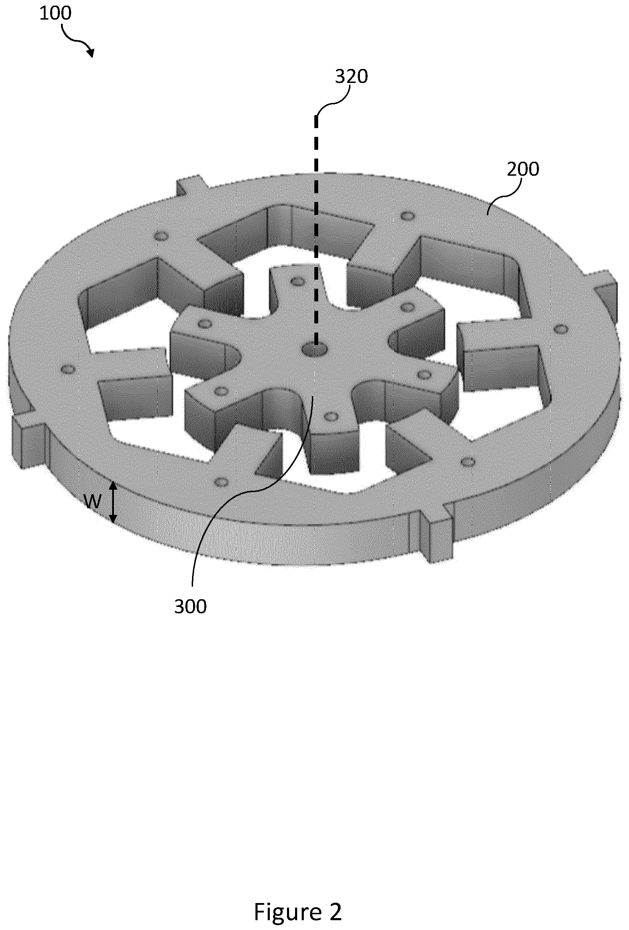

Referring now to Figures 1 and 2, a stator 200 and a rotor 300 of an assembly 100 for varying inductance according to some implementations of the present technology are shown. The stator 200 and the rotor 300 are illustrated in isolation for ease of explanation; additional components of the assembly 100 are described below. The stator 200 defines a cavity 202 therein. The rotor 300 is disposed in the cavity 202 and rotates in said cavity 202. More specifically, in this implementation, the stator 200 defines a closed periphery centered around a rotation axis 320 of the rotor 300, the stator 200 having a substantially circular shape.

In use, the stator 200 is configured to produce at least one pair of magnetically opposed poles. To do so, the stator 200 defines, in this implementation, a plurality of inwardly extending members 210. As will be described in greater details hereinafter, each inwardly extending member 210 may be used to produce a corresponding magnetic pole. The inwardly extending members 210 are evenly distributed along the inner periphery of the stator 200 and form pairs of inwardly extending members 210 such that the inwardly extending members 210 of a same pair are diametrically opposed. For example, a pair of inwardly extending members $210_A$, $210_B$ is shown on Figure 1. A line extending between the inwardly extending members of a same pair defines a first direction, the rotation axis 320 being orthogonal to said first direction. In other words, the inwardly extending members 210 extend orthogonally to the rotation axis 320 of the rotor 300.

The rotor 300 has a rotor body 305 disposed between the inwardly extending members 210 of the stator 200. The rotor 300 defines a plurality of outwardly extending members 310 extending from the rotor body 305 orthogonally to the rotation axis 320. A number of outwardly extending members 310 is the same as a number of inwardly extending members 210.

In the illustrated implementation, the number of outwardly extending members 310 is equal to the number of inwardly extending members 210. More specifically, the outwardly extending members 310 are defined such that the plurality of outwardly extending members 310 of the rotor 300 simultaneously faces the inwardly extending members 210 upon rotation of the rotor 300 about the rotation axis 320. Figures 1 and 2 show the stator 200 and the rotor 300 in a position where the outwardly extending members 310 are not aligned with the inwardly extending members 210, also referred to as an unaligned position.

Both of the stator 200 and rotor 300 are made of ferrimagnetic or ferromagnetic material. The stator and the rotor may be made of a same or different materials having corresponding magnetic permeabilities. In this implementation, the stator 200 and the rotor 300 are made of stacked metallic foils or sheets of ferrimagnetic or ferromagnetic material and have a height (H) width W between 0,5 mm and 100 mm (see Figure 2). It should be noted that the stator 200 and/or the rotor 300 may include a single metallic foil. Each metallic foil may be made of grain oriented steel having a thickness of about 0.2mm. The shape and/or thickness of the metallic foils of a stack is substantially identical. A material of the metallic foils may include iron (Fe) and/or silicon (Si).

As an example, the metallic foils may be treated to orient local magnetic moments of the metallic foil along the metallic foil itself before being used in the assembly 100. Such an alignment may help to reduce power loss and increase a confinement rate of the magnetic field within the rotor 300 and stator 200.

In some implementations, insulating material may be disposed between the metallic foils to reduce Foucault currents that may occur when a conductive material, such as metal, is exposed to a varying magnetic field. Indeed, this electromagnetic phenomenon can lead to power losses and reduce the efficiency of the assembly 100. In the same or other implementations, the metallic foils are coated with an insulating coating such as magnet wire insulation varnish (e.g. polyurethane-based varnish, solderable polyesterimide-based varnish or any other suitable insulation coating).

In some alternative implementations, the rotor 300 may be formed of a non-ferromagnetic such as, for example and without limitation, wood, plastics, aluminium, or brass, and include piece elements (e.g. bars) of a ferrimagnetic or ferromagnetic material disposed at ends of the outwardly extending members 310.

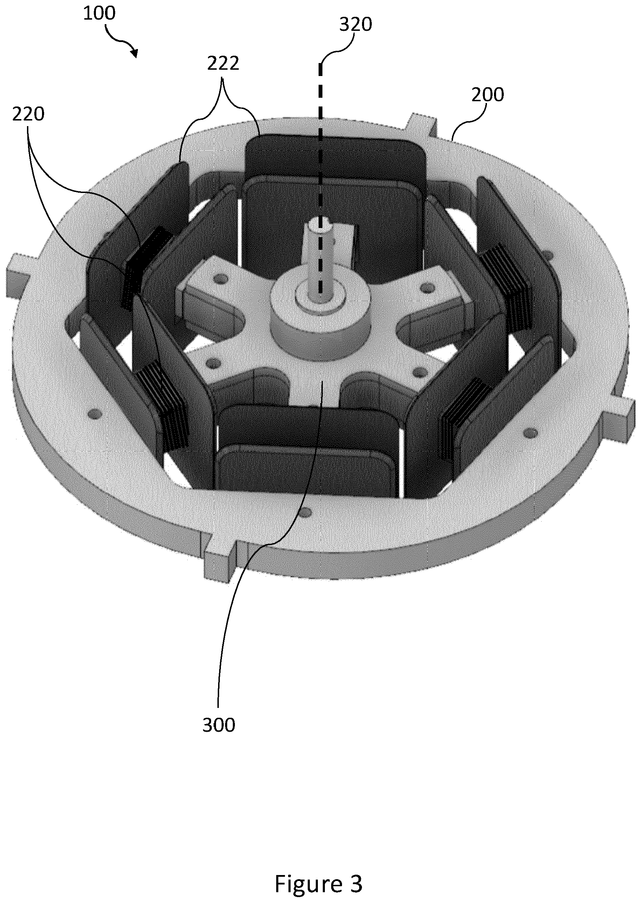

As shown in Figure 3, the assembly 100 further includes wire coils 220 positioned around coil supports 222 mounted onto the inwardly extending members 210 of the stator 200. In this implementation, the wire coils 220 are connected together in series in such a way to define the desired magnetic poles 410. For example and without limitation, the wire coils 220 may have a diameter of 9 cm and be formed of copper wire having a diameter of 1.27mm.

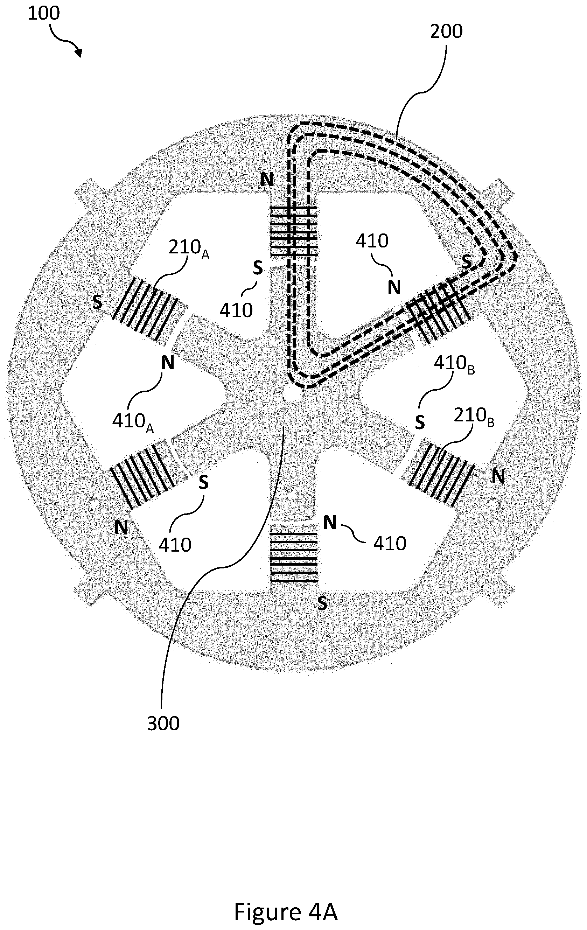

With additional reference to Figure 4A, upon electric current flowing in a given wire coil 220, a magnetic field is generated by said wire coil 220 with magnetically opposed poles being formed at an end and a base of the inwardly extending members 210. In the illustrative example of Figure 4A, a North magnetic pole $410_A$ is produced at an end of the inwardly extending members $210_A$ and a South magnetic pole $410_B$ is produced at near a base thereof. Polarity of the magnetic poles at a given inwardly extending member 210 depends on a direction of the electric current in the corresponding wire coil 220. It should be noted that the assembly 100 is depicted in an aligned position in Figure 4A.

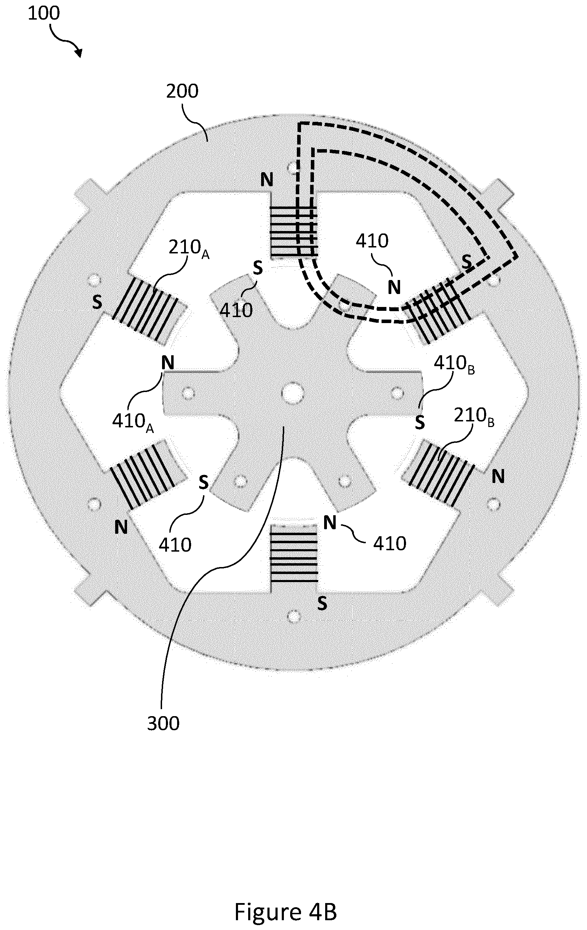

The assembly 100 is depicted in an unaligned position in Figure 4B. As can be seen, a path of the field lines of the magnetic field goes through a longer section of air (i.e. between the stator 200 and the rotor 300) when the assembly 100 is in the unaligned position. Therefore, an inductance of the assembly 100 is reduced compared to the aligned position shown on Figure 4A.

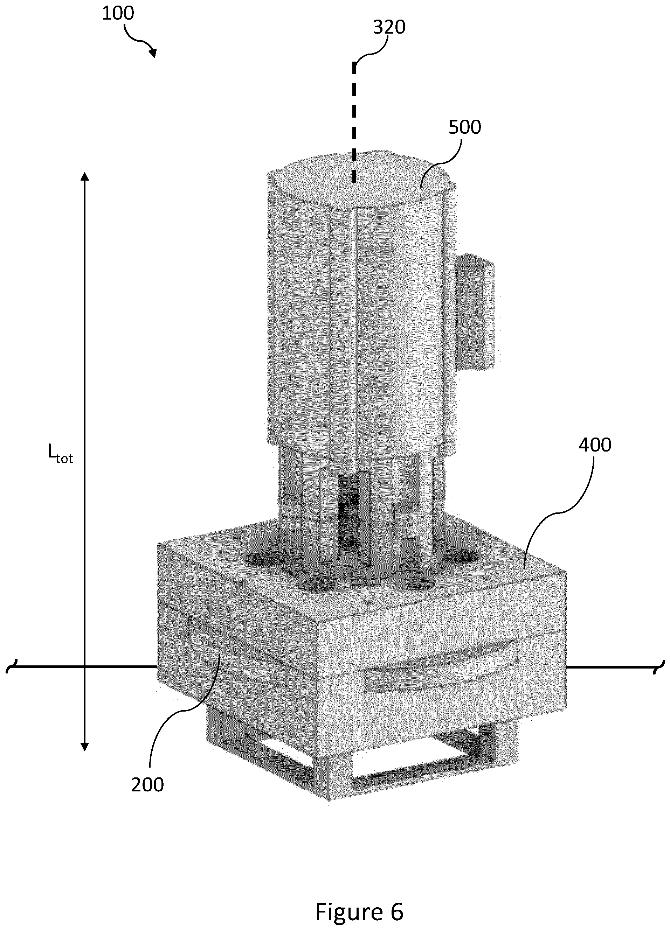

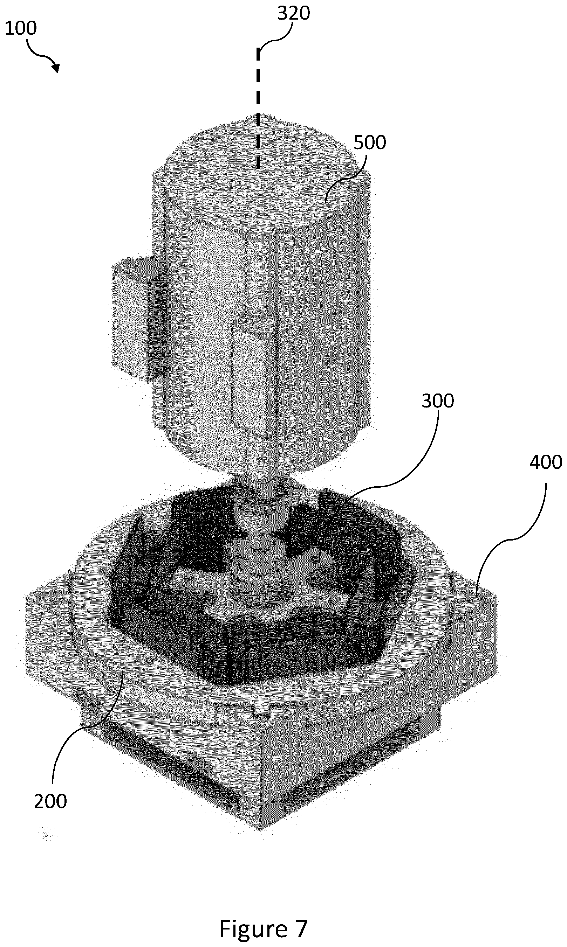

As will be described in greater details hereinafter, the rotor 300 is operatively connected to an actuator 500 (see Figures 6 and 7) which, upon rotation of the rotor 300 around the rotation axis 320, causes periodically alternating disposal of the outwardly extending members 310 in front of the magnetic poles 410 simultaneously, with a frequency $f_1$. The frequency $f_1$ of the alternation of the assembly 100 being between the unaligned position and the aligned position.

As will be described in greater details herein after, an external force (e.g. mechanical force) may cause the rotor 300 to rotate, thereby alters the reluctance, and thus the inductance, of the wire coils 220. In an absence of a power generating device for providing electric current in the wire coils 220, random charges in the wire coils 220 due to statistical fluctuations may still generate a magnetic field. More specifically, due to said statistical current fluctuations and the connection of the wire coils 220 to a capacitor (e.g. 5uF to 10uF), a macroscopic periodically varying current may be generated. Rotation of the rotor 300 exerted by the external force leads to resonance that occurs to produce a relatively large periodically varying electromagnetic field. Indeed, said macroscopic periodically varying current has a magnitude sufficient to be periodically altered by the varying magnetic permeability disposed in front of the pairs of magnetically opposed poles 410 upon rotation of the rotor 300. The mechanical energy of actuation of the rotor 300 by the external force is thus converted in electromagnetic energy through the assembly 100 and may be subsequently conveyed by the wire coils 220 to a load. The assembly 100 may further be used as an electric generator in at least some embodiments.

The directions of the current flowing in the wire coils 220 are set such that magnetically opposed poles 410 are produced at ends of the inwardly extending members 210. Therefore, pairs of magnetically opposed poles are produced around the rotor 300. In the context of the present disclosure, the magnetic poles 410 of a same pair of magnetically opposed poles are disposed on opposite sides of the cavity 202 defined by the stator 200. For example, a pair of magnetically opposed poles is formed by the North magnetic pole $410_A$ and the South magnetic pole $410_B$ of Figure 4. The stator 200 defines, in this implementation, six inwardly extending members 210 and is thus configured to produce three pairs of magnetically opposed poles. For example and without limitations, the stator 200 may have a diameter of about 30 cm and the rotor 300 may have a diameter of about 15 cm.

As the material disposed in the front of the magnetically opposed poles 410 periodically varies between a material of the outwardly extending members 310 and air between two adjacent outwardly extending members 310 (or any fluid surrounding the assembly 100), the magnetic field produced by the assembly 100 is periodically altered. More specifically, the magnetic fields of the wire coils 220 exert a magnetic force on the rotor 300 which is countered by rotation of the rotor 300. The magnetic force may be expressed as: $\mathbf{F}_{mag} = \nabla(\mathbf{M} \cdot \mathbf{B})$ where $\mathbf{B}$ is the magnetic field and $\mathbf{M}$ is a magnetic moment induced in the rotor 300. Periodic alternating positioning of the outwardly extending members 310 in front of the pairs of magnetically opposed poles 410 thereby causes a periodic alternation of the inductance of the assembly 100. More specifically, the inductance of the assembly periodically alternates between a high-inductance value $L_{max}$ and a low-inductance value $L_{min}$ at the frequency $f_1$. In this implementation, the low-inductance value $L_{min}$ is about 153mH and the high-inductance value $L_{max}$ is about 506mH.

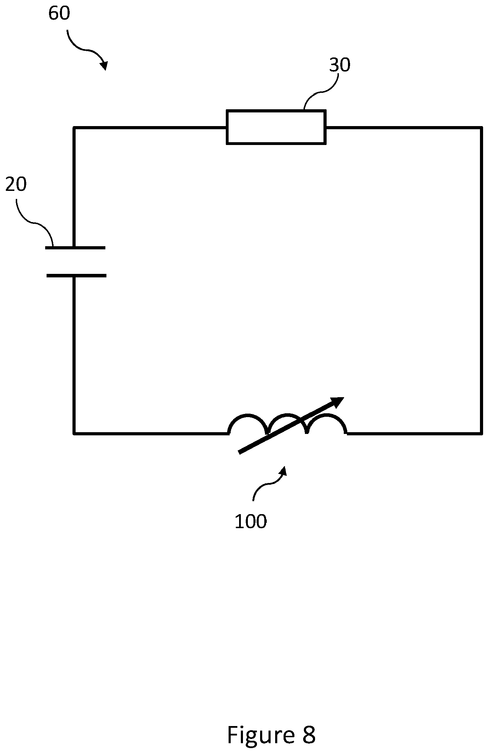

More specifically, the assembly 10 may be electrically connected to a capacitor to form, in use, a resonant electric circuit. Figure 8 is a schematic diagram of the assembly 100 electrically connected to a capacitor 20 having a capacitance C, thereby forming a resonant electric circuit 60. A component 30 having a resistivity R in the resonant electric circuit 60 represents the internal inherent resistivity of the resonant electric circuit 60 (i.e. a resistivity of the assembly 10, of the capacitor 20 and of electric wires connecting the components of the electric circuit 60). An inductance of the assembly 10 is noted L(t) and the resonant electric circuit 60 is resonant at an eigenfrequency noted $f_0$. The eigenfrequency $f_0$ depends at least in part on the values of the resistivity R, the capacitance C and an average inductance $L_{av}$ of the assembly 10. In this embodiment, $L_{av} = (L_{max} + L_{min})/2$. Moreover, an energy collected in the assembly 10 may be expressed as:

$$E(t) = \frac{1}{2}L(t).i(t)^2$$

where i(t) is the electric current flowing in the circuit 60.

In use, an actuation of the rotor 300 by the external force alters the magnetic field produced by the wire coils 220. In an absence of a power generating device in the electric circuit 60, random charges in the circuit 60 due to statistical fluctuations may still generate a magnetic field having a relative magnitude high enough to periodically altered by the varying magnetic permeability disposed in front of the magnetic poles 410 upon actuation of the rotor 300. Energy of actuation of the rotor 300is thus converted in magnetic energy through the assembly 10 and may be subsequently stored by the capacitor 20 under the form of electrostatic energy.

In this implementation, the capacitor 20 is generally empty of charge upon starting actuation the rotor 300. In other words, a charge Q(t) stored by the capacitor is null: $Q(t = 0) = 0$. In alternative implementations, the capacitor 20 may be charged prior actuation of the variable magnetic permeability component 200: $Q(t = 0) = Q_0 > 0$.

In this implementation, the frequency $f_1$ of alternating disposal of the outwardly extending members 310 in front of the wire coils 220 disposed on the inwardly extending members 210 in (i.e. the frequency of variation of the inductance L(t) of the assembly 100) is set to be twice the eigenfrequency of the electric circuit 60, such that: $f_1 = 2f_0$.

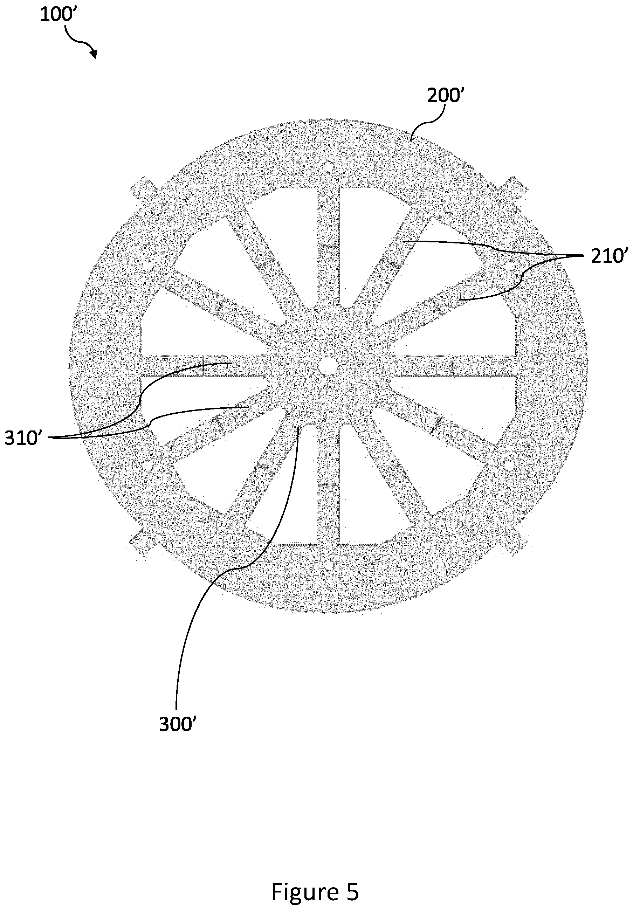

Figure 5 shows a stator 200' and a rotor 300' of an assembly 100' according to another implementation of the present technology. In this implementation, the stator 200 defines twelve inwardly extending members 210' and is thus configured to produce six pairs of magnetically opposed poles in use. The rotor 300 also defines twelve outwardly extending members 310' in this implementation. The number of inwardly extending members 210' is an even number to define pairs of magnetically opposed poles. For example, in some other implementations, the stator 200 could have eight inwardly extending members 210 and would be thus configured to produce four pairs of magnetically opposed poles. In these other implementations, the rotor 300 could similarly have eight outwardly extending members 310.

In the present implementation, the assembly 100 includes a casing 400 to support positioning of the stator 200 and rotor 300 assembly and to house and protect components thereof from environmental factors such as dust, moisture or physical damage, as shown on Figures 6 and 7. While described herein as housing the assembly 100, it is contemplated that the illustrated casing 400 could house other implementations of assemblies, including but not limited to the assembly 100'. In Figure 7, an upper section of the casing 400 has been removed to show an interior space thereof. The assembly 100 includes a support pin (not shown) extending along the rotation axis 320 and operably connected to the rotor 300 and the casing 400 to enable a rotation of the rotor 300 in the casing 400.

In this implementation, the assembly 100 further includes an actuator 500 operatively coupled to the rotor 300 for providing rotation of the rotor 300 about the rotation axis 320. Operative coupling between the actuator 500 and the rotor 300 could include, for example and without limitation, magnetic bearings to reduce friction during transmission of a coupling force from the actuator 500 to the rotor 300. The actuator 500 may be for example an electric motor, a reciprocating engine, a propeller or any blade arrangement rotating due to a flow of a fluid (e.g. air or water) thereagainst. The rotation of the rotor 300 may be for example caused by, via the actuator 500, natural convection of ambient air flowing through the actuator 500 and inducing a rotation thereof. The rotation of the rotor 300 may be provided by another actuating component in alternative implementations.

In the illustrated implementation, the casing 400 is configured and arranged to be disposed on a support surface such that the rotation axis 320 extends substantially orthogonally to the support surface. For example, the rotation axis 320 may extend parallel to a gravity axis, with the support surface being generally horizontal. The actuator 500 is substantially centered on the rotation axis 320 along the gravity axis (e.g. above or below the rotor 300) to limit a potential effect of weight imbalance in the assembly 100 that could damage said assembly 100 upon rotation of the rotor 300. In some alternative implementations, the casing 400 could be disposed on the support surface 60 such that the rotation axis 320 could be substantially parallel to the support surface 60.

In this implementation, a diameter of the stator 200 is between 2.5 and 8cm, and a length $L_{tot}$ of the assembly including the casing 400 and the actuator 500 is between 58 and 64cm. Therefore, the disclosed assembly 100 has a relatively small form factor compared to other electric generators. Conversion ratio of the assembly 100 in at least some implementations has been measured to be above 0.9, which provides increased conversion performances compared to other electric generators. However, it should be noted that, in alternative implementations, the diameter of the stator 200 may be up to 1m depending on the application.

In use, the actuator 500 may actuate the rotor 300 such that the inductance of the assembly 100 periodically varies according to: $L(t) = L_0 + \Delta L \cdot \cos(\omega_1 t - \varphi)$, $\omega_1 = 2\pi f_1$, $f_1$ being a frequency of the variation of the inductance of the assembly 100 and depending, *inter alia*, on the number of magnetic poles 410. Therefore, $f_1$ is proportional to $f_{rot} = \omega_{rot}/2\pi$, $\omega_{rot}$ being a rotational speed of the rotor 300 about the rotation axis 320 led by the actuator 500.

In this embodiment, the eigenfrequency $f_0$ may be expressed as:

$$f_0 = \frac{1}{2\pi}\sqrt{\frac{1}{CL_0} - \frac{R^2}{4L_0}}.$$

The energy collected by the wire coils 410 of the assembly 500 may thus be expressed as

$$E(t) = \frac{1}{2}L_0 \cdot i(t)^2 + \frac{1}{2}\Delta L \cdot \cos(\omega_1 t - \varphi) \cdot i(t)^2$$

, where $i(t)$ is the electric current flowing in the resonant electric circuit 60 and $\varphi$ is an arbitrary constant phase.

As previously described, the rotational speed of the stator 300 is set by the actuator 500 such that $f_1 = 2 \cdot f_0$ thereby matching a resonance of the resonant electric circuit 60. As such, the magnetic energy received by the assembly 100 is increased when $|i(t)|$ increases during oscillations thereof compared to a non-varying inductance. Energy of actuation of the rotor 300 is thus converted in magnetic energy through the assembly 500 and may be subsequently stored by the capacitor 20 under the form of electrostatic energy.

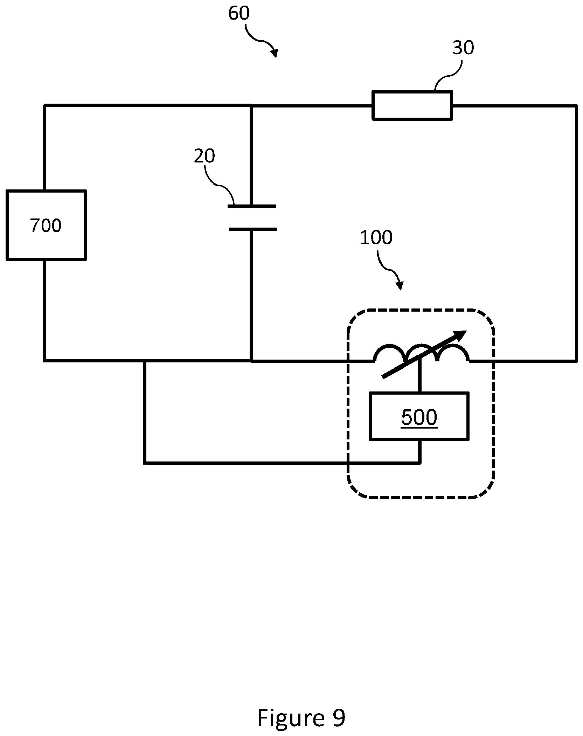

In some implementations and as shown on Figure 9, the resonant electric circuit 60 may further includes a load 700 to be powered. The load 700 may be, for example, connected in parallel to the capacitor 20 such that electrostatic energy is transferred from the capacitor 20 to the load 700. Electric power is thus provided by the circuit 60 to the load 700. The load 700 may be, for example and without limitation, a car engine, or any other load that may be provided with electrical power.

In at least some embodiments, the actuator 500 providing rotation of the rotor 300 about the rotation axis 320 is electrically connected to the circuit 60 such that electric power input of the actuator 500 is at least partly provided by the electric circuit 60 itself. As an example, the circuit 60 may be implemented into a windmill, a wind kinetic energy providing, at least in part, input energy of the actuator 500 such that the rotation of the rotor 300 about the rotation axis 320 may be initiated. Therefore, resonant oscillations of the current are produced in the electric circuit 60, an electric energy collected by the capacitor 20 may further be transferred the load 700 (e.g. a windmill motor). In use, energy received from the kinetic energy of the wind may thus by used to operate the actuator 500 of the assembly 100 and/or be collected for storage thereof, the windmill thus operating without standard electric power source.

It will be understood that, although the embodiments presented herein have been described with reference to specific features and structures, it is clear that various modifications and combinations may be made without departing from such disclosures. The specification and drawings are, accordingly, to be regarded simply as an illustration of the discussed implementations or embodiments and their principles as defined by the appended claims, and are contemplated to cover any and all modifications, variations, combinations or equivalents that fall within the scope of the present disclosure.

## Claims

1. An assembly for varying inductance, the assembly comprising:

   a stator configured to produce at least one pair of magnetically opposed poles, a line extending from one pole of the at least one pair of magnetically opposed poles to another one of the at least one pair of magnetically opposed poles defining a first direction,
   the stator defining a cavity therein, poles of a same pair of magnetically opposed poles being disposed on opposite sides of the cavity; and
   a rotor disposed in the cavity of the stator, the rotor including a rotor body disposed between the poles of each of the at least one pair of magnetically opposed poles,
   the rotor being configured to rotate about a rotation axis thereof, the rotation axis extending orthogonally to the first direction,
   the rotor body defining a plurality of outwardly extending members extending from the rotor body orthogonally to the rotation axis of the rotor,
   when in use, rotation of the rotor about the rotation axis causing a periodical alternation of an inductance of the assembly.

2. The assembly of claim 1, wherein:

the stator defines a closed periphery centered around the rotation axis of the rotor,
the stator defines at least one pair of inwardly extending members extending orthogonally to the rotation axis, the inwardly extending members of a same pair being diametrically opposed, the inwardly extending members being evenly distributed along the closed periphery, and
each of the inwardly extending members being configured to receive a wire coil to produce the magnetically opposed poles.

3. The assembly of claim 1 or 2, wherein the stator has a substantially rounded shape centered around the rotation axis of the rotor.

4. The assembly of any one of claims 1 to 3, further comprising wire coils disposed on the inwardly extending members, the wire coils being electrically connected to a capacitor an electric current flowing in the wire coils producing the at least one pair of magnetically opposed poles.

5. The assembly of claim 4, wherein:

the wire coils are electrically connected to a capacitor thereby forming an electric circuit;
and
a rotation speed of the rotor about the rotation axis is set such that a frequency of alternation of an inductance of the assembly is twice an eigenfrequency of the electric circuit.

6. The assembly of any one of claims 1 to 5, further comprising an actuator operatively coupled to the rotor for causing a rotation thereof.

7. The assembly of claim 6, wherein the actuator includes at least one of a motor, a reciprocating engine, a propeller and a rotating blade arrangement.

8. The assembly of any one of claims 1 to 7, further comprising a casing for housing the stator and the rotor, the casing being configured to be disposed on a support surface such that the rotation axis extends substantially orthogonally to the support surface.

9. The assembly of claim 8, wherein the rotation axis extends substantially parallel to a gravity axis.

10. The assembly of any one of claims 1 to 7, further comprising a casing for housing the stator and the rotor, the casing being configured to be disposed on a support surface such that the rotation axis extends substantially parallel to the support surface.

11. The assembly of any one of claims 1 to 10, wherein at least one of the stator and the rotor is made of stacked metallic foils.

12. The assembly of claim 11, wherein each metallic foil is treated to orient local magnetic moments of the metallic foil therealong.

13. The assembly of any one of claims 1 to 12, wherein the at least one pair of magnetically opposed poles includes three pairs of magnetically opposed poles, the stator being configured to produce one pole on each of the six inwardly extending members.

14. The assembly of any one of claims 1 to 13, wherein the plurality of outwardly extending members of the rotor simultaneously faces the magnetically opposed poles upon rotation of the rotor about the rotation axis, each outwardly extending member facing a respective one pole of the magnetically opposed poles.

15. An assembly comprising:

a stator having a closed periphery defining a cavity therein, the stator comprising at least one pair of inwardly extending members extending along a main plane, inwardly extending members of a same pair of inwardly extending members being disposed on opposite sides of the cavity, the inwardly extending members being distributed evenly along the closed periphery;

a plurality of wire coils disposed on the at least one pair of inwardly extending members, the wire coils being electrically connected to a capacitor; and

a rotor disposed in the cavity of the stator, the rotor being configured to rotate about a rotation axis thereof, the rotation axis extending orthogonally to the main plane,

wherein:

the rotor body defining a plurality of outwardly extending members extending from the rotor body orthogonally to the rotation axis of the rotor,

when in use, rotation of the rotor about the rotation axis causing a periodical alternation of an inductance of the assembly,

the plurality of outwardly extending members of the rotor simultaneously facing the inwardly extending members upon rotation of the rotor about the rotation axis, each outwardly extending member facing a respective one pole of the inwardly extending members.

Figure 1

Figure 2

Figure 3

Figure 4A

100

200

N

210_A

S

410

410

S

N

410

N

S

410_A

S

N

410

S

410_B

S

210_B

N

N

410

S

300

Figure 4B

Figure 5

Figure 6

Figure 7

Figure 8

Figure 9

**EUROPEAN SEARCH REPORT**

Application Number

EP 23 19 8412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 1 744 609 A (JOSEPH BETHENOD ET AL) 21 January 1930 (1930-01-21) * page 2, line 52 – page 3, line 118; figures 1-8 * | 1-15 | INV. H02K19/24 H02K19/36 H02K53/00 H02K47/20 |
| X | US 5 043 618 A (STEPHENSON JOHN M [GB]) 27 August 1991 (1991-08-27) * column 1, line 19 – column 2, line 56; figure 2 * | 1-12,14, 15 | ADD. H02K11/00 |
| X | US 3 173 076 A (ADKINS HAROLD T) 9 March 1965 (1965-03-09) * column 2, lines 14-18; figures 1, 8 * | 1-13 | |
| X | US 5 289 107 A (RADUN ARTHUR V [US] ET AL) 22 February 1994 (1994-02-22) * column 3, lines 65-75; figures 1A-1B * | 1-13 | |
| A | US 2005/151376 A1 (BERNHOFF HANS [SE] ET AL) 14 July 2005 (2005-07-14) * figure 1 * | 8,9 | |
| A | WO 2023/111860 A1 (ELAN RES 9456 4424 QUEBEC INC [CA]) 22 June 2023 (2023-06-22) * paragraphs [0058], [0067] * | 4,7 | TECHNICAL FIELDS SEARCHED (IPC) H02K |

The present search report has been drawn up for all claims

| Place of search | Date of completion of the search | Examiner |
|---|---|---|
| The Hague | 1 March 2024 | Georgopoulos, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 8412**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-03-2024**

| Patent document cited in search report | | Publication date | Patent family member(s) | | Publication date |
|---|---|---|---|---|---|
| US 1744609 | A | 21-01-1930 | NONE | | |
| US 5043618 | A | 27-08-1991 | DE | 68910181 T2 | 17-02-1994 |
| | | | EP | 0343845 A2 | 29-11-1989 |
| | | | ES | 2045427 T3 | 16-01-1994 |
| | | | SG | 33650 G | 01-09-1995 |
| | | | US | 5043618 A | 27-08-1991 |
| US 3173076 | A | 09-03-1965 | GB | 962649 A | 01-07-1964 |
| | | | US | 3173076 A | 09-03-1965 |
| US 5289107 | A | 22-02-1994 | EP | 0564067 A2 | 06-10-1993 |
| | | | JP | H0654600 A | 25-02-1994 |
| | | | US | 5289107 A | 22-02-1994 |
| US 2005151376 | A1 | 14-07-2005 | AU | 2002360040 A1 | 24-07-2003 |
| | | | EP | 1466094 A1 | 13-10-2004 |
| | | | US | 2005151376 A1 | 14-07-2005 |
| | | | WO | 03058059 A1 | 17-07-2003 |
| WO 2023111860 | A1 | 22-06-2023 | CH | 719631 A2 | 01-10-2023 |
| | | | WO | 2023111860 A1 | 22-06-2023 |

EPO FORM P0459

For more details about this annex : see Official Journal of the European Patent Office, No. 12/82